# EUROPEAN PATENT SPECIFICATION

(11) **EP 2 936 002 B1**
(45) Date of publication and mention of the grant of the patent: **25.01.2017**
(21) Application number: 13824492.6
(22) Date of filing: 17.12.2013
(51) Int. Cl.: F24C 15/20, A23B 4/052

(54) **AN EXHAUST HOOD WITH SMOKING FUNCTION**
ABZUGSHAUBE MIT RÄUCHERFUNKTION
HOTTE D'ASPIRATION AYANT UNE FONCTION DE FUMAGE

(30) Priority: 20.12.2012 TR 201215032
(43) Date of publication of application: 28.10.2015
(73) Proprietor: Arçelik Anonim Sirketi, 34950 Istanbul (TR)
(72) Inventor: KARATAS, Haluk, 34950 Istanbul (TR); OZYURT, Bekir, 34950 Istanbul (TR)
(86) International application number: PCT/EP2013/076862
(87) International publication number: WO 2014/095831

(56) References cited:
- WO-A1-2008/037405
- DE-C1- 4 001 961
- FR-A1- 2 529 996
- FR-A1- 2 551 631

## Description

The present invention relates to an exhaust hood having smoking function which is positioned above cooking devices.

The smoking method is used for prolonging storage life of foods and adding flavor to foods with its unique aroma. During smoking, the medium has to be filled with smoke by burning sawdust with slow combustion inside the volume wherein the food is placed. In ovens with smoking function, the chimney of the cooking volume is kept closed while the smoking process is applied to food. After the smoking process is ended, the smoke inside the cooking volume disperses into the kitchen environment. Generally an exhaust hood is situated above the cooking devices used in houses and the smell and humidity released by the cooked foods are provided to be discharged to the exterior environment by means of the exhaust hood. In the ovens with smoking function, even though the dense smoke released at the end of the smoking process is discharged to the exterior environment from the exhaust hood, inevitably it disperses into the kitchen environment through the gap between the oven and the exhaust hood. Furthermore, the smell of the smoke that permeates into the oven in the smoking process adversely affects the subsequent cooking processes.

In the International Patent Application No. WO2008082317, a smoking insert is explained, which is placed inside a fireplace used for heating the room.

In the United States Patent Application No. US2008121632, an oven is explained, which comprises a smoking unit installed inside the receiving chamber.

In document WO 2008/037405, an extraction hood is disclosed, comprising a storage cabinet for spices or other foodstuff, and means for maintaining constant temperature and humidity inside the cabinet.

The aim of the present invention is the realization of an exhaust hood that prevents smoke from being dispersed into the kitchen environment in the smoking process of the foods.

The exhaust hood realized in order to attain the aim of the present invention, explicated in the first claim and the respective claims thereof, is positioned above the ovens and cooktops and used in discharging the smell and humidity released from the cooked foods to the exterior environment, and a smoking unit is integrated into the body of the exhaust hood inside a closed partition which provides the implementation of the smoking process for adding flavor to the foods.

The smoking unit comprises a cover and a loading opening situated at the front surface of the exhaust hood, enabling the foods desired to be smoked to be placed into the smoking partition inside the exhaust hood. A carrier tray in perforated or grilled configuration is situated inside the smoking partition and the foods desired to be smoked are placed on the carrier. The sawdust chamber that creates smoke is disposed under the carrier in the partition and smoke is created by burning the sawdust contained in the sawdust chamber by means of a resistant heater. Furthermore, a partition heater provides the heating of the smoking partition to the desired temperature.

In an embodiment of the present invention, the smoking unit comprises a discharge opening that opens into the exhaust duct from the smoking partition inside the exhaust hood and that provides the smoke accumulated inside the smoking partition to be discharged from the exhaust duct to the exterior environment, and furthermore a shutter that opens/closes over the opening by means of an actuator.

At the start of the smoking process, the control unit enables the shutter to be changed to the open position by means of the actuator for a predetermined time period and prevents the flavor of the foods from being adversely affected by discharging the smoke created at the start of the smoking process. The control unit keeps the shutter in the closed position during the smoking process and provides the discharge of the smoke at the end of the smoking process by again changing the shutter to the open position.

The empty space inside the exhaust hood is utilized by integrating the smoking unit into the exhaust hood of the present invention and the smoke created in the smoking process is prevented from dispersing into the kitchen environment.

The exhaust hood realized in order to attain the aim of the present invention is illustrated in the attached figures, where:

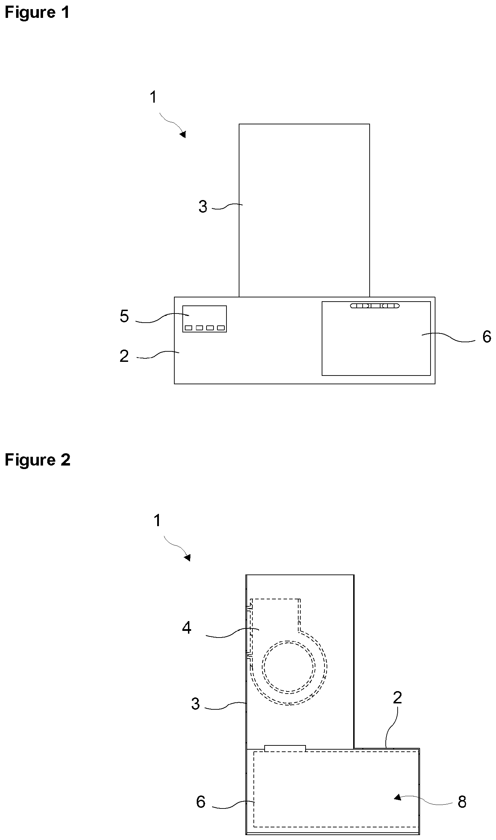

Figure 1 - is the front view of an exhaust hood.
Figure 2 - is the sideways view of an exhaust hood.
Figure 3 - is the perspective view of an exhaust hood.
Figure 4 - is the perspective view of an exhaust hood and a carrier disposed inside the smoking partition.
Figure 5 - is the perspective view of an exhaust hood, a sawdust chamber and a sawdust heater disposed inside the smoking partition.
Figure 6 - is the perspective view of an exhaust hood and a partition heater disposed inside the smoking partition.
Figure 7 - is the cross-sectional view of an exhaust hood comprising the smoking unit.

The elements illustrated in the figures are numbered as follows:
1. Exhaust hood
2. Body
3. Exhaust duct
4. Aspirator
5. Control unit
6. Smoking unit
7. Loading opening
8. Partition
9. Cover
10. Carrier
11. Sawdust chamber
12. Sawdust heater
13. Partition heater
14. Discharge opening
15. Actuator
16. Shutter

The exhaust hood (1) positioned above the cooking devices like oven, cooktop, providing the discharge of the smell and humidity released from the cooked foods to the exterior environment, comprises a body (2), an exhaust duct (3) connected to the chimney which opens to the exterior environment, an aspirator (4) mounted inside the exhaust duct (3), having a fan (not shown in the figures) disposed inside a spiral casing, providing air to be aspirated and discharged outside and a control unit (5) that regulates the operation of the aspirator (4).

The exhaust hood (1) of the present invention comprises a smoking unit (6) integrated with its body (2), wherein the smoking process is applied to the foods placed therein.

The exhaust hood (1) of the present invention, not only discharges the smell and humidity released from the foods cooked in the cooking device over which it is positioned but also contains the smoking unit (6) inside its body (2) that is used in order to add flavor and/or prolong the storage life of foods like meat, fish and cheese. The control unit (5) provides control of both the aspirator (4) and the smoking unit (6). The smoke that is released at the end of the smoking process is discharged directly to the exterior environment by means of the exhaust duct (3) and is prevented from dispersing into the kitchen environment.

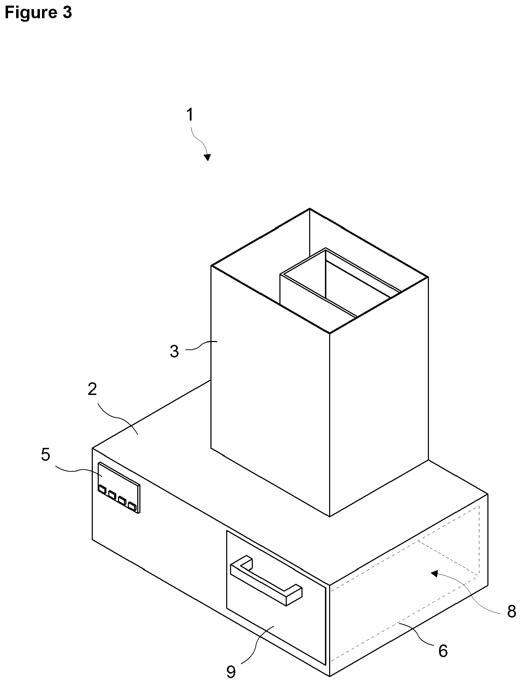

The smoking unit (6) comprises a loading opening (7) situated at the front surface of the exhaust hood (1) body (2), a closed partition (8) extending from the loading opening (7) to the interior of the body (2) and a cover (9) disposed at the front of the opening (7) (Figure 3). By opening the cover (9) the foods desired to be smoked are placed into the partition (8) from the loading opening (7).

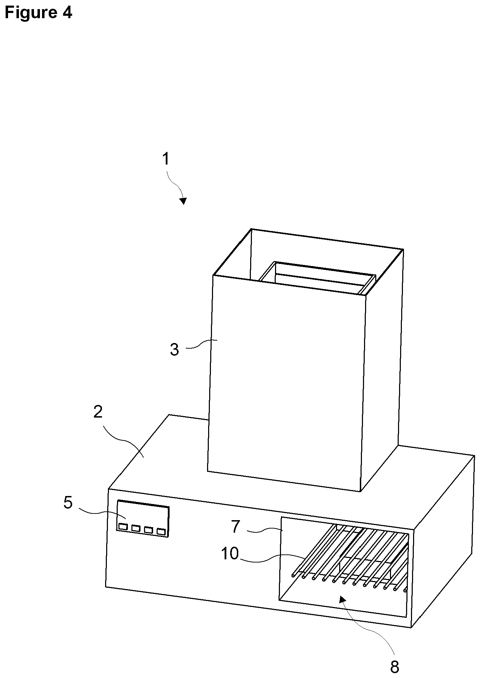

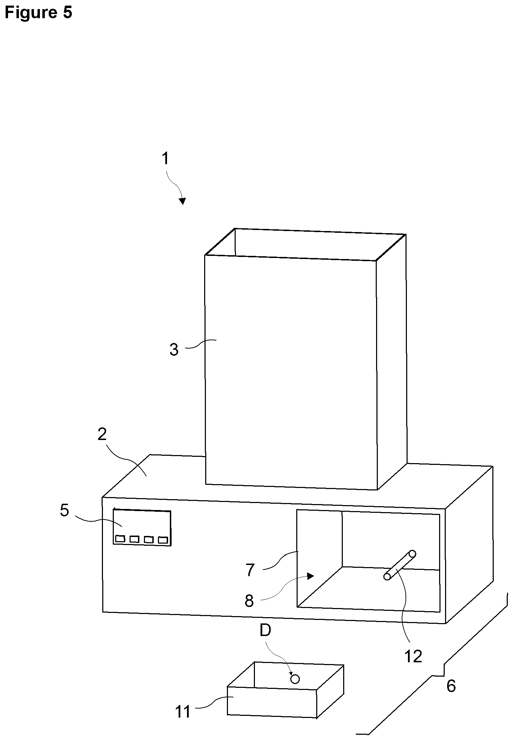

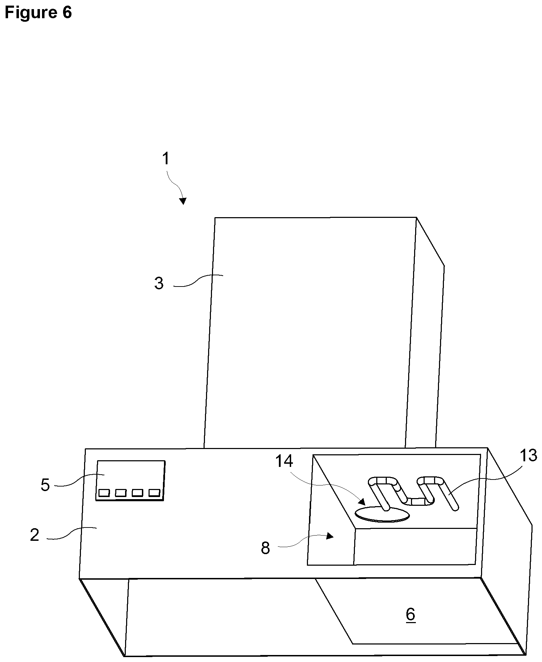

The smoking unit (6) furthermore comprises a carrier (10) in grill form or perforated form, disposed inside the partition (8) whereon foods desired to be smoked are placed, a sawdust chamber (11) disposed under the carrier (10) and wherein sawdust is filled, a sawdust heater (12) disposed inside the partition (8), extending into the sawdust chamber (11) through a hole (D) on the rear wall of the sawdust chamber (11) when the sawdust chamber (11) is placed into the partition (8) and providing generation of smoke by burning the sawdust, and a partition heater (13) disposed at the ceiling of the partition (8) and providing the heating of the partition (8) to the desired temperature (Figure 4, Figure 5, Figure 6).

Prior to the smoking process, sawdust of the preferred type, for example obtained from oak or beech wood, is placed into the sawdust chamber (11). The foods desired to be smoked are placed on the carrier (10) and the sawdust chamber (11) is fitted through the hole (D) over the sawdust heater (12) to be disposed under the carrier (10) inside the partition (8). When the smoking process is started, the control unit (5) activates the sawdust heater (12) and the partition heater (13) and smoke is generated inside the partition (8).

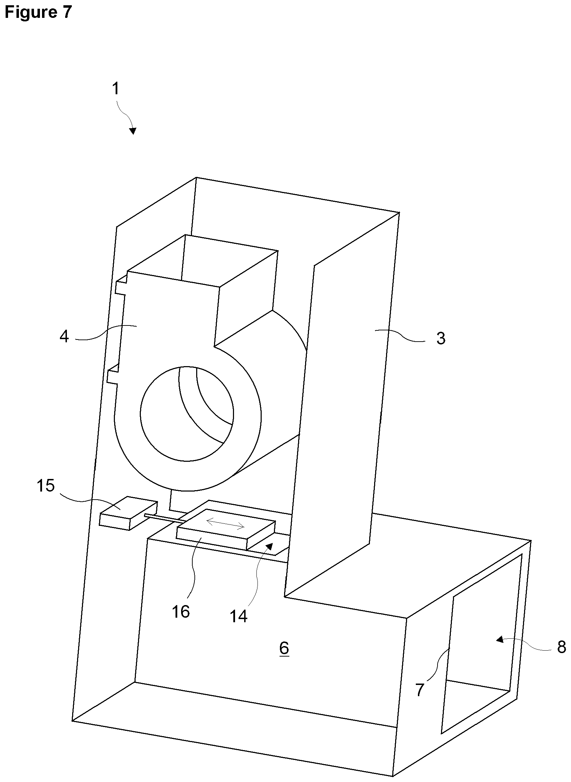

In an embodiment of the present invention, the exhaust hood (1) comprises a discharge opening (14) opening from the partition (8) to the discharge duct (3), which provides discharge of the smoke accumulated in the partition (8) to the exterior environment through the exhaust duct (3), an actuator (15) connected to the control unit (5) and a shutter (16) that is disposed over the discharge opening (14) and that opens/closes the discharge opening (14) by being actuated by the actuator (15) (Figure 7).

In another embodiment of the present invention, the control unit (5) enables the shutter (16) to be changed to the open position for a predetermined time period at the start of the smoking process by means of the actuator (15), enables the shutter (16) to be changed to the closed position during the smoking process and the shutter (16) to be changed back to the open position at the end of the smoking process.

At the start of the smoking process, the control unit (5) changes the shutter (16) to the open position by means of the actuator (15) for a predetermined time period recorded in its memory and provides the discharge of the smoke generated in the smoking unit (6) to the exhaust duct (3) through the discharge opening (14) and to the exterior environment. At the start of the smoking process, the smoke generated when the sawdust in the sawdust chamber (11) is first burned is prevented from adversely affecting the flavor of the foods. The control unit (5) changes the shutter (16), kept in the open position for a while at the start of the smoking process, to the closed position by means of the actuator (15) and enables the shutter (16) to be kept in the closed position during the smoking process. The control unit (5) changes the shutter (16) back to the open position at the end of the smoking process by means of the actuator (15), operates the aspirator (4) and provides the discharge of the smoke inside the partition (8) from the discharge opening (14) to the exterior environment by means of the exhaust duct (3) without allowing it to be dispersed into the kitchen environment.

The smoking unit (6) is integrated to the body (2) of the exhaust hood (1) of the present invention and the dead space inside the body (2) is utilized. At the end of the smoking process, smoke is prevented from being dispersed into the kitchen environment. The partition (8), wherein smoke is generated, is connected to the exhaust duct (3) in the exhaust hood (1) with the discharge opening (14), smoke is discharged controllably by means of the shutter (16), smoke quantity inside the partition (8) can be regulated and the quality of smoking is increased.

## Claims

1. An exhaust hood (1) comprising a body (2) positioned at the upper side of cooking devices, an exhaust duct (3), an aspirator (4) mounted inside the exhaust duct (3), a control unit (5) disposed on the body (2) and which regulates the operation of the aspirator (4), **characterized in that** a smoking unit (6) integrated into its body (2), wherein the smoking process is applied to the foods placed therein.

2. An exhaust hood (1) as in Claim 1, **characterized in that** the smoking unit (6) comprising a loading opening (7) situated at the front surface of the body (2), a closed partition (8) extending from the loading opening (7) to the interior of the body (2) and a cover (9) disposed at the front of the opening (7).

3. An exhaust hood (1) as in Claim 1 or 2, **characterized in that** a carrier (10) disposed inside the partition (8), whereon foods desired to be smoked are placed, a sawdust chamber (11) wherein sawdust is filled, a sawdust heater (12) extending into the sawdust chamber (11) from a hole (D) on the rear wall of the sawdust chamber (11) and a partition heater (13) which provides the heating of the partition (8) to the desired temperature.

4. An exhaust hood (1) as in any one of the above claims, **characterized in that** a discharge opening (14) opening from the partition (8) into the discharge duct (3), which provides the discharge of the smoke accumulated in the partition (8) to the exterior environment from the exhaust duct (3), an actuator (15) connected to the control unit (5) and a shutter (16) that is disposed over the discharge opening (14) and that opens/closes the discharge opening (14) by being actuated by the actuator (15).

5. An exhaust hood (1) as in any one of the above claims, **characterized in that** the control unit (5) that enables the shutter (16) to be changed to the open position for a predetermined time period by means of the actuator (15) at the start of the smoking process, enables the shutter (16) to be changed to the closed position during the smoking process and the shutter (16) to be changed back to the open position at the end of the smoking process.

## Patentansprüche

1. - Abzughaube (1), umfassend einen Gehäusekörper (2), der auf der Oberseite von Kochvorrichtungen angeordnet ist, eine Abzugleitung (3), eine Ansaugvorrichtung (4), die im Inneren der Abzugleitung (3) angebracht ist, eine Steuereinheit (5), die am Gehäusekörper (2) angeordnet ist und den Betrieb der Ansaugvorrichtung (4) regelt, **dadurch gekennzeichnet, dass** eine Räuchereinheit (6) in ihren Gehäusekörper (2) eingebaut ist, wobei der Räuchervorgang auf die darin angeordneten Lebensmittel angewandt wird.

2. - Abzughaube (1) nach Anspruch 1, **dadurch gekennzeichnet, dass** die Räuchereinheit (6) eine Ladeöffnung (7), die an der Frontfläche des Gehäusekörpers (2) angeordnet ist, einen geschlossenen Teilraum (8), der sich von der Ladeöffnung (7) ins Innere des Gehäusekörpers (2) erstreckt, und eine Abdeckung (9) umfasst, die an der Vorderseite der Öffnung (7) angeordnet ist.

3. - Abzughaube (1) nach Anspruch 1 oder 2, **dadurch gekennzeichnet, dass** ein Träger (10), im Inneren des Teilraums (8) angeordnet ist und auf den zu räuchernde Lebensmittel gelegt werden, eine Sägemehlkammer (11), in die Sägemehl gefüllt wird, eine Sägemehlheizeinrichtung (12), die sich von der Sägemehlkammer (11) von einer Bohrung (D) an der Rückwand der Sägemehlkammer (11) erstreckt, und eine Teilraumheizeinrichtung (13), die dafür sorgt, dass der Teilraum (8) auf die gewünschte Temperatur erwärmt wird.

4. - Abzughaube (1) nach einem der vorangehenden Ansprüche, **dadurch gekennzeichnet, dass** sich eine Auslassöffnung (14) von dem Teilraum (8) in die Auslassleitung (3) öffnet, und das Ablassen des Rauchs, der sich in dem Teilraum (8) angesammelt hat, durch die Abzugleitung (3) an die Außenumgebung ermöglicht, ein Stellglied (15) mit der Steuereinheit (5) verbunden ist und ein Verschluss (16) über der Auslassöffnung (14) angeordnet ist, der die Auslassöffnung (14) öffnet/schließt, indem er von dem Stellglied (15) betätigt wird.

5. - Abzughaube (1) nach einem der vorangehenden Ansprüche, **dadurch gekennzeichnet, dass** die Steuereinheit (5) ermöglicht, dass der Verschluss (16) mithilfe des Stellglieds (15) zu Beginn des Räuchervorgangs für einen vorgegebenen Zeitraum in die offenen Stellung gebracht wird und es ermöglicht, dass der Verschluss (16) während des Räuchervorgangs in die geschlossene Stellung gebracht wird und der Verschluss (16) am Ende des Räuchervorgangs zurück in die offene Stellung gebracht wird.

## Revendications

1. - Une hotte de ventilation (1) comprenant un corps (2) qui est positionné au côté supérieur de dispositifs de cuisson, un conduit de ventilation (3), un aspirateur (4) qui est monté dans le conduit de ventilation (3), une unité de commande (5) qui est disposé sur le corps (2) et qui régule le fonctionnement de l'aspirateur (4), **caractérisée en ce qu'**une unité de fumage (6) est intégrée dans le corps (2), où le processus de fumage est appliqué aux aliments qui y sont placés.

2. - Une hotte de ventilation (1) selon la Revendication 1, **caractérisée en ce que** l'unité de fumage (6) comprend une ouverture de chargement (7) qui est située à la surface avant du corps (2), une cloison fermée (8) qui s'étend à partir de l'ouverture de chargement (7) à l'intérieur du corps (2) et un couvercle (9) qui est situé à l'avant de l'ouverture (7).

3. - Une hotte de ventilation (1) selon la Revendication 1 ou 2, **caractérisée par** un support (10) qui est disposé dans la cloison (8), sur lequel les aliments à fumer sont placés, une chambre de sciure (11) dans laquelle la sciure est remplie, un dispositif de chauffage de sciure (12) qui s'étend dans la chambre de sciure (11) par un trou (D) sur la paroi arrière de la chambre de sciure (11) et un dispositif de chauffage de cloison (13) qui permet le chauffage de la cloison (8) à la température désirée.

4. - Une hotte de ventilation (1) selon l'une quelconque des revendications précédentes, **caractérisée par** une ouverture d'évacuation (14) qui s'ouvre à partir de la cloison (8) dans le conduit de ventilation (3) et qui permet l'évacuation de la fumée accumulée dans la cloison (8) à l'environnement extérieur à partir du conduit de ventilation (3), un actionneur (15) qui est relié à l'unité de commande (5) et un volet (16) qui est disposé sur l'ouverture d'évacuation (14) et qui ouvre/ferme l'ouverture d'évacuation (14) en étant actionné par l'actionneur (15).

5. - Une hotte de ventilation (1) selon l'une quelconque des revendications précédentes, **caractérisée en ce que** l'unité de commande (5) permet au volet (16) d'être changé à la position ouverture pour une période de temps prédéterminée par l'intermédiaire de l'actionneur (15) au début du processus de fumage, permet au volet (16) d'être changé à la position fermée pendant le processus de fumage et permet au volet (16) d'être retourné à la position ouverture à la fin du processus de fumage.
